# EUROPÄISCHE PATENTANMELDUNG

(11) **EP 4 403 754 A1**
(43) Veröffentlichungstag der Anmeldung: **24.07.2024**
(21) Anmeldenummer: 24151351.4
(22) Anmeldetag: 11.01.2024
(51) Int. Cl.: F01L 1/047, F01L 1/08, F01L 13/00

(54) **VENTILTRIEBVORRICHTUNG**

(30) Priorität: 19.01.2023 AT 500252023
(71) Anmelder: KTM AG, 5230 Mattighofen (AT)
(72) Erfinder: KARL, Tobias, 4890 Frankenmarkt (AT)
(74) Vertreter: Torggler & Hofmann Patentanwälte - Innsbruck

(57) **Zusammenfassung**

Ventiltriebvorrichtung (1) mit mindestens einer Welle, wobei eine Anzahl an Betätigungskonturen (4) zum Betätigen wenigstens eines Betätigungsmittels (7) eines Ventils eines Verbrennungsmotors drehfest an der mindestens einen Welle angeordnet ist, wobei eine Sensoreinheit (5) mit einer Anzahl an Sensoren (6) vorgesehen ist, wobei jeder Sensor (6) der Anzahl an Sensoren (6) einen räumlichen Erfassungsbereich (8) zur Erfassung einer physikalischen Größe aufweist, wobei mindestens eine Betätigungskontur (4) der Anzahl an Betätigungskonturen (4) in zumindest einer Axialposition (A1, A2) zumindest teilweise im räumlichen Erfassungsbereich (8) mindestens eines Sensors (6) der Anzahl an Sensoren (6) angeordnet ist.

## Beschreibung

Die Erfindung betrifft eine Ventiltriebvorrichtung mit mindestens einer Welle, wobei eine Anzahl an Betätigungskonturen zum Betätigen wenigstens eines Betätigungsmittels eines Ventils eines Verbrennungsmotors drehfest an der mindestens einen Welle angeordnet ist, wobei eine Sensoreinheit mit einer Anzahl an Sensoren vorgesehen ist, wobei jeder Sensor der Anzahl an Sensoren einen räumlichen Erfassungsbereich zur Erfassung einer physikalischen Größe aufweist. Die Erfindung betrifft weiterhin einen Verbrennungsmotor mit mindestens einem Ventil und mindestens eine Ventiltriebvorrichtung und ein Motorrad mit einem Verbrennungsmotor. Zudem betrifft die Erfindung ein Verfahren zum Bestimmen der Axial- und/oder Drehposition mindestens einer Betätigungskontur zum Betätigen wenigstens eines Betätigungsmittels eines Ventils eines Verbrennungsmotors mittels einer Ventiltriebvorrichtung.

Aus dem Stand der Technik sind Ventiltriebvorrichtungen mit Betätigungskonturen, insbesondere Nocken, welche axial verschiebbar und drehfest an einer Welle (Nockenwelle) befestigt sind, bekannt. Typischerweise sind an einem Schiebestück mindestens zwei Betätigungskonturen in unterschiedlichen Axialbereichen angeordnet, wobei sich die Betätigungskonturen voneinander unterscheiden. Durch die axiale Verschiebung des Schiebestücks und den darauf angeordneten Betätigungskonturen kann eine der mindestens zwei Betätigungskonturen in Eingriff mit einem Betätigungsmittel eines Motorventils gebracht werden. Durch die verschiedenen Betätigungskonturen können Betätigungsmittel der Motorventile je nach aktiver Betätigungskontur verschieden betätigt werden, insbesondere können zwei verschiedene Betätigungsprofile in Abhängigkeit des Phasenwinkels realisiert werden.

Beim Eingriff einer ersten Betätigungskontur kann das Motorventil weiter oder länger geöffnet werden als beim Eingriff mit einer zweiten Betätigungskontur. Es kann nur eine Betätigungskontur vorgesehen sein, wobei das Betätigungsmittel der Motorventile entweder von der Betätigungskontur betätigt wird oder gar nicht betätigt wird.

Die Druckschrift DE 10 2011 056 833 A1 zeigt eine Ventiltriebvorrichtung für einen Verbrennungsmotor. Die Ventiltriebvorrichtung weist eine Welle sowie ein erstes und ein zweites drehfest und axial verschiebbar auf der Welle angeordnetes Schiebestück auf. Auf dem ersten Schiebestück und auf dem zweiten Schiebestück sind jeweils ein Geberrad mit einer unterschiedlichen Anzahl an Laschen angeordnet. Auf der Welle ist ein Geberrad mit Lücken angeordnet. Je nach axialer Position der Schiebestücke sind unterschiedliche Laschen in die Lücken eingefahren. Ein über dem Geberrad mit den Lücken angeordneter Sensor kann durch Auswertung des Lücken-/Laschenmusters berührungslos die axiale Position des ersten Schiebestücks und des zweiten Schiebestücks bestimmen. Vorteilhafterweise kann das mit einem einzigen Sensor realisiert werden. Die radiale Position der Welle kann ebenfalls bestimmt werden.

Die Druckschrift US 2014/0303873 A1 zeigt eine Ventiltriebvorrichtung für einen Verbrennungsmotor, welche ein Schiebestück mit zwei Betätigungskonturen aufweist. Am Schiebestück sind zudem zwei nebeneinander angeordnete, unterschiedliche Geberkonturen angeordnet, welche im Erfassungsbereich eines Sensors angeordnet sind. Der Sensor kann bestimmen, welche Betätigungskontur aktiv ist. Ein weiterer Sensor an der Welle (Nockenwelle) kann die Phase der Welle relativ zur Kurbelwelle bestimmen.

Bekannt sind auch einkanalige Sensoren mit separater mechanischer Kontur am Schiebestück, womit die Position des Schiebestücks detektiert werden kann.

Nachteilig am Stand der Technik ist, dass Geberkonturen vorgesehen sein müssen oder eine separate mechanische Vorrichtung am Schiebestück notwendig ist. Insbesondere bei der Verwendung in Motorradmotoren ist das aufgrund des Platzmangels nicht immer möglich. Zudem sind viele Bauteile nötig, wodurch die Kosten steigen.

Eine Aufgabe der Erfindung ist, eine platzsparende und bauteilsparende Möglichkeit zu schaffen, die Drehposition und/oder die Axialposition von Betätigungskonturen zum Betätigen wenigstens eines Betätigungsmittels eines Ventils einer Brennkraftmaschine zu bestimmen.

Die Aufgabe wird durch die Ansprüche 1, 14, 15 und 16 gelöst.

Erfindungsgemäß ist vorgesehen, dass mindestens eine Betätigungskontur der Anzahl an Betätigungskonturen in zumindest einer Axialposition zumindest teilweise im räumlichen Erfassungsbereich mindestens eines Sensors der Anzahl an Sensoren angeordnet ist.

Dadurch, dass die mindestens eine Betätigungskontur in zumindest einer Axialposition im räumlichen Erfassungsbereich mindestens eines Sensors angeordnet ist, kann die Präsenz der Betätigungskontur im Erfassungsbereich des mindestens einen Sensors detektiert werden. Damit kann auf die Axialposition der mindestens einen Betätigungskontur rückgeschlossen werden.

Zudem kann die Form der Betätigungskontur bestimmt werden, wenn der zeitliche Verlauf der physikalischen Größe, hervorgerufen durch die Rotation der Betätigungskontur, analysiert wird.

Verschiedene Formen der Betätigungskontur können beispielswiese unterschiedliche Pulsweiten im zeitlichen Verlauf eine von der physikalische Größe bedingten Signals hervorrufen.

Auch kann die Drehposition der Betätigungskontur bestimmt werden, beispielsweise über die Magnitude der physikalischen Größe, oder es kann die Phase der Betätigungskontur relativ zur Kurbelwelle bestimmt werden, beispielsweise über die zeitliche Lage der Pulse.

Bevorzugt ist vorgesehen, dass der räumliche Erfassungsbereich des mindestens eines Sensors der Anzahl an Sensoren in einem begrenzten axialen Bereich angeordnet ist. Damit kann von der Detektion der Präsenz einer Betätigungskontur im Erfassungsbereich auf eine Axialposition der Anzahl der Betätigungskonturen rückgeschlossen werden.

Der Erfassungsbereich kann begrenzter als der physikalisch mögliche Erfassungsbereich sein. Bevorzugt kann vorgesehen sein, dass der räumliche Erfassungsbereich des mindestens eines Sensors der Anzahl an Sensoren jenem räumlichen Bereich entspricht, in welchem die Präsenz mindestens einer Betätigungskontur die Messung der physikalischen Größe über einem bestimmten Schwellwert hervorruft. Die Bestimmung, ob ein Schwellwert überschritten ist oder nicht, kann insbesondere in einer Auswerteinheit erfolgen.

Die Anzahl an Sensoren und/oder Betätigungskonturen kann eins, zwei oder größer sein.

In einem bevorzugten Ausführungsbeispiel ist an der Welle mindestens ein Schiebestück axial verschiebbar und drehfest gelagert, wobei die Anzahl an Betätigungskonturen am mindestens einen Schiebestück angeordnet ist. Insbesondere sind die Betätigungskonturen der Anzahl der Betätigungskonturen untereinander nicht verschiebbar gelagert.

Alternativ kann vorgesehen sein, dass die Welle gegenüber dem Betätigungsmittel des Ventils einer Brennkraftmaschine verschiebbar gelagert ist und die Anzahl an Betätigungskonturen vorzugsweise direkt auf der Welle angeordnet sind.

In einem bevorzugten Ausführungsbeispiel kann jede Betätigungskontur der Anzahl an Betätigungskonturen in zumindest einer Axialposition am mindestens einen Betätigungsmittel des Ventils der Brennkraftmaschine anliegen. Durch das Einnehmen von unterschiedlichen Axialpositionen können unterschiedliche Betätigungskonturen das Betätigungsmittel betätigen, womit ein Ventil des Brennkraftmaschine auf unterschiedliche Art und Weise betrieben werden kann.

Es ist bevorzugt vorgesehen, dass die Sensoreinheit ortsfest gegenüber einem Zylinderkopf einer Brennkraftmaschine angeordnet ist. Somit kann durch ein Verschieben der Anzahl an Betätigungskonturen jeweils eine unterschiedliche Betätigungskontur mit dem Betätigungsmittel in Eingriff gebracht werden.

Es kann vorgesehen sein, dass die Anzahl an Sensoren auf einer gemeinsamen Platine der Sensoreinheit angeordnet sind und/oder in einem gemeinsamen Gehäuse der Sensoreinheit angeordnet sind. Damit wird eine besonders kompakte und kostengünstige Bauweise erzielt.

In einem bevorzugten Ausführungsbeispiel ist die mindestens eine Betätigungskontur der Anzahl an Betätigungskonturen in zumindest einer Axialposition und zumindest einer Drehposition in einem Abstand von weniger als 10 Millimeter, vorzugsweise weniger als 5 Millimeter und besonders bevorzugt weniger als 2,5 Millimeter, von mindestens einem Sensor der Anzahl an Sensoren angeordnet. In dieser Position ist die Betätigungskontur bevorzugt im Erfassungsbereich dieses Sensors. Dieser Abstand kann in jener Drehposition eingenommen werden, in welcher eine "Nase" der Betätigungskontur dem Sensor zugewandt angeordnet ist.

In einem bevorzugten Ausführungsbeispiel ist der mindestens eine Sensor der Anzahl an Sensoren als berührungsloser Sensor ausgebildet. Als physikalische Größe, welche vom Sensor erfasst wird, kommt beispielsweise ein elektromagnetisches Feld, beispielsweise ein Magnetfeld, ein elektrisches Feld oder eine elektromagnetische Welle infrage.

Bevorzugt kann der mindestens eine Sensor der Anzahl an Sensoren als Magnetfeldsensor, insbesondere Hall-Sensor, ausgebildet sein, vorzugsweise wobei ein von der mindestens einen Betätigungskontur erzeugtes und/oder von der mindestens einen Betätigungskontur beeinflusstes Magnetfeld im Erfassungsbereich vom mindestens einen Sensor erfassbar ist.

In einem bevorzugten Ausführungsbeispiel kann die Präsenz und/oder die Form und/oder die Drehposition und/oder die Phase mindestens einer Betätigungskontur der Anzahl an Betätigungskonturen im Erfassungsbereich eines Sensors der Anzahl an Sensoren von diesem Sensor, insbesondere zusammen mit einer Auswerteeinheit, detektierbar sein.

Eine Detektion der "Präsenz" mindestens einer Betätigungskontur bedeutet die Bestimmung, ob eine Betätigungskontur im Erfassungsbereich angeordnet ist.

Eine Detektion der "Form" mindestens einer Betätigungskontur lässt einen Rückschluss darauf zu, welche Betätigungskontur im Erfassungsbereich ist.

Eine Detektion der "Drehposition" mindestens einer Betätigungskontur lässt einen Rückschluss auf die Drehposition der Betätigungskontur, insbesondere relativ zur Kurbelwelle, zu. Insbesondere kann es sich um eine statische Drehposition handeln.

Mit "Phase" ist die Phase der Rotation der (Nocken-)Welle, beispielsweise in Relation zur Kurbelwelle, gemeint.

Es kann vorgesehen sein, dass vom mindestens einen Sensor eine in Abhängigkeit der Präsenz und/oder Form und/oder Drehposition und/oder Phase der im Erfassungsbereich befindlichen mindestens einen Betätigungskontur veränderliche physikalische Größe messbar ist.

Insbesondere ist vorgesehen, dass ein von der physikalischen Größe abhängiges, vorzugsweise elektrisches, Signal an eine Auswerteeinheit übermittelbar ist, wobei das Signal, insbesondere der zeitliche Verlauf des Signals, von der Auswerteeinheit auswertbar ist.

Die Auswerteeinheit kann dazu konfiguriert sein, auf eine Axialposition und/oder eine Drehposition der mindestens einen Betätigungskontur rückzuschließen, vorzugsweise durch Auswerten von einer Stärke und/oder Pulslängen des Signals.

Beispielsweise kann von einem Vorliegen einer bestimmten Stärke des Signals, insbesondere eines Mittelwerts oder eines Maximums, auf die Präsenz einer Betätigungskontur im Erfassungsbereich und damit auf die Axialposition der Betätigungskontur geschlossen werden. Auch kann auf eine Drehposition der mindestens einen Betätigungskontur rückgeschlossen werden, da die Stärke je nach Drehposition größer oder kleiner sein kann.

Beispielsweise kann mittels einer Pulslänge des Signals auf die Form einer Betätigungskontur rückgeschlossen werden, damit kann bestimmt werden, welche Betätigungskontur im Erfassungsbereich angeordnet ist. Auch kann mittels der Pulslänge auf eine Phase der Betätigungskontur, beispielsweise relativ zur Kurbelwelle, rückgeschlossen werden.

In einem besonders bevorzugten Ausführungsbeispiel ist der axiale Abstand zwischen zwei Sensoren der Anzahl an Sensoren größer als die axiale Breite mindestens einer Betätigungskontur der Anzahl an Betätigungskonturen. Damit wird ein "toter Bereich" zwischen zwei Erfassungsbereichen geschaffen. Durch den axialen Abstand von mindestens einer Betätigungskontur kann eine Betätigungskontur zwischen zwei Erfassungsbereichen angeordnet sein, ohne selbst erfasst zu werden.

Insbesondere können in einer solchen Situation zwei Betätigungskonturen vorgesehen sein, sodass eine erste Betätigungskontur im Erfassungsbereich eines Sensors angeordnet ist und eine zweite Betätigungskontur im toten Bereich angeordnet ist.

Zusätzlich oder alternativ kann vorgesehen sein, dass der axiale Abstand zwischen zwei Sensoren der Anzahl an Sensoren kleiner als die axiale Breite zweier nebeneinander angeordneter Betätigungskonturen der Anzahl an Betätigungskonturen ist.

Im toten Bereich zwischen den zwei Erfassungsbereichen haben damit nicht zwei Betätigungskonturen Platz.

Es kann vorgesehen sein, dass von einer Auswerteeinheit der Sensorsignale eine Fehlermeldung ausgebbar ist, wenn mindestens zwei, vorzugsweise beide, Sensoren die Präsenz einer Betätigungskontur in ihrem Erfassungsbereich detektieren.

Dies ist insbesondere dann vorteilhaft, wenn zwei nebeneinander angeordnete Betätigungskonturen vorgesehen sind, wobei die Erfassungsbereiche zweier Sensoren einen Abstand von weniger als die axiale Breite beider Betätigungskonturen groß ist. Dann gibt es eine fehlerhafte Zwischenposition, bei welcher jeweils eine Betätigungskontur zumindest teilweise in einem Erfassungsbereich angeordnet ist. In so einer Zwischenposition detektieren beide Sensoren die Präsenz einer Betätigungskontur in ihrem Erfassungsbereich.

Es ist besonders bevorzugt vorgesehen, dass von der Anzahl an Betätigungskonturen eine erste Axialposition und eine zweite Axialposition relativ zur Sensoreinheit einnehmbar ist. Insbesondere ist diese erste und zweite Axialposition im Normalbetrieb einnehmbar. Nur bei einer fehlerhaften Funktionsweise kann eine Axialposition dazwischen eingenommen werden.

In einem Ausführungsbeispiel ist vorgesehen, dass mindestens eine Betätigungskontur der Anzahl an Betätigungskonturen in der ersten Axialposition im Erfassungsbereich mindestens eines Sensors der Anzahl an Sensoren und in der zweiten Axialposition außerhalb des Erfassungsbereichs dieses mindestens einen Sensors angeordnet ist. Durch die Bestimmung der Präsenz der mindestens einen Betätigungskontur im Erfassungsbereich kann auf die Axialposition geschlossen werden.

Es ist besonders bevorzugt vorgesehen, dass die Anzahl der Sensoren einen ersten Sensor mit einem ersten Erfassungsbereich und einen zweiten Sensor mit einem zweiten Erfassungsbereich umfasst, insbesondere aus diesen besteht. Dabei ist insbesondere vorgesehen, dass der erste Sensor und der zweite Sensor so angeordnet sind, dass der erste und der zweite Erfassungsbereich zumindest teilweise verschiedene räumliche Bereiche einnehmen. So kann beispielsweise die Präsenz einer Betätigungskontur in mehreren Bereichen detektiert werden.

In einem möglichen Ausführungsbeispiel ist mindestens eine Betätigungskontur der Anzahl an Betätigungskonturen in der ersten Axialposition im Erfassungsbereich des ersten Sensors und in der zweiten Axialposition im Erfassungsbereich des zweiten Sensors angeordnet.

In einem bevorzugten Ausführungsbeispiel umfasst die Anzahl an Betätigungsvorrichtungen eine erste Betätigungsvorrichtung und eine zweite Betätigungsvorrichtung. Es ist dabei besonders bevorzugt vorgesehen, dass die Form der ersten Betätigungsvorrichtung von der Form der zweiten Betätigungsvorrichtung verschieden ist.

In einem möglichen Ausführungsbeispiel sind die zweite Betätigungskontur in der ersten Axialposition im Erfassungsbereich mindestens eines Sensors der Anzahl an Sensoren angeordnet und die erste Betätigungskontur in der zweiten Axialposition im Erfassungsbereich dieses mindestens einen Sensors angeordnet.

In einem besonders bevorzugten Ausführungsbeispiel ist die erste Betätigungskontur in der ersten Axialposition im Erfassungsbereich des ersten Sensors angeordnet und/oder die zweite Betätigungskontur in der ersten Axialposition außerhalb des Erfassungsbereichs des zweiten Sensors.

Zudem oder alternativ kann vorgesehen sein, dass die zweite Betätigungskontur in der zweiten Axialposition im Erfassungsbereich des zweiten Sensors ist und/oder die erste Betätigungskontur in der zweiten Axialposition außerhalb des Erfassungsbereichs des ersten Sensors ist.

Detektiert der erste Sensor die Präsenz einer Betätigungskontur (der ersten), kann daraus geschlossen werden, dass die erste Axialposition vorliegt. Zudem kann vorgesehen sein, dass für die Bestimmung, dass die erste Axialposition vorliegt, der zweite Sensor die Präsenz keiner Betätigungskontur detektieren muss.

Detektiert der zweite Sensor die Präsenz einer Betätigungskontur (der zweiten), kann darauf geschlossen werden, dass die zweite Axialposition vorliegt. Zudem kann vorgesehen sein, dass für die Bestimmung, dass die zweite Axialposition vorliegt, der erste Sensor die Präsenz keiner Betätigungskontur detektieren muss.

Detektiert sowohl der erste als auch der zweite Sensor die Präsenz einer Betätigungskontur (der ersten bzw. der zweiten), liegt eine fehlerhafte Zwischenposition vor und es kann eine Fehlermeldung ausgegeben werden und/oder der Motor gestoppt werden.

Es kann, insbesondere im Kontext der vorangehenden Absätze, in der ersten Axialposition die zweite Betätigungskontur und/oder in der zweiten Axialposition die erste Betätigungskontur am mindestens einen Betätigungsmittel anliegen.

Insbesondere ist das Betätigungsmittel in einem axialen Bereich zwischen den beiden Sensoren, insbesondere ihrer Erfassungsbereiche, angeordnet. Die aktive Betätigungskontur, welche das Betätigungsmittel betätigt, ist damit jene Betätigungskontur, welche gerade nicht in einem Erfassungsbereich befindlich ist.

In einem erfindungsgemäßen Verfahren zum Bestimmen der Axial- und/oder Drehposition mindestens einer Betätigungskontur zum Betätigen wenigstens eines Betätigungsmittels eines Ventils einer Brennkraftmaschine mittels einer Ventiltriebvorrichtung, insbesondere nach einem der vorhergehenden Ansprüche, sind die folgenden Verfahrensschritten vorgesehen:
- Detektieren mindestens einer physikalischen Größe, insbesondere eines Magnetfelds, durch mindestens einen Sensor einer Anzahl an Sensoren, wobei die mindestens eine physikalische Größe von der im räumlichen Erfassungsbereich des mindestens einen Sensors befindlichen Betätigungskontur, insbesondere von deren Präsenz, Form, Phase und/oder Drehposition, beeinflusst wird,
- der mindestens eine Sensor gibt ein, vorzugsweise elektrisches, Signal in Abhängigkeit der mindestens einen detektierten physikalischen Größe an eine Auswerteeinheit ab,
- das Signal, vorzugsweise eine Stärke und/oder mindestens eine Pulslänge des Signals, wird von der Auswerteeinheit ausgewertet,
- es wird auf die Axial- und/oder Drehposition und/oder Phase der mindestens einen Betätigungskontur rückgeschlossen.

Weitere Ausführungsbeispiel und Details sind den Figuren zu entnehmen. Dabei zeigen:
- Fig. 1: Ventiltriebvorrichtung mit einer Sensoreinheit und einem Schiebestück in perspektivischer Darstellung
- Fig. 2a: Ventiltriebvorrichtung mit einer Sensoreinheit mit zwei Sensoren und einem Schiebestück mit zwei Betätigungskonturen in einer Schnittdarstellung
- Fig. 2b: Ventiltriebvorrichtung aus Fig. 2a in einer alternativen Schnittdarstellung
- Fig. 3: Ventiltriebvorrichtung mit einer Sensoreinheit mit zwei Sensoren und einem Schiebestück mit zwei Betätigungskonturen in einer ersten und einer zweiten Axialposition
- Fig. 4a: Schematische Darstellung einer Ventiltriebvorrichtung mit einer Betätigungskontur und einem Sensor
- Fig. 4b: Schematische Darstellung einer Ventiltriebvorrichtung mit einer Betätigungskontur und zwei Sensoren
- Fig. 5a: Schematische Darstellung einer Ventiltriebvorrichtung mit zwei Betätigungskonturen und einem zentralen Sensor
- Fig. 5b: Schematische Darstellung einer Ventiltriebvorrichtung mit zwei Betätigungskonturen und einem dezentralen Sensor
- Fig. 6a: Schematische Darstellung einer Ventiltriebvorrichtung mit zwei Betätigungskonturen und zwei beabstandeten Sensoren
- Fig. 6b: Schematische Darstellung einer Ventiltriebvorrichtung mit zwei Betätigungskonturen und zwei dezentralen Sensoren

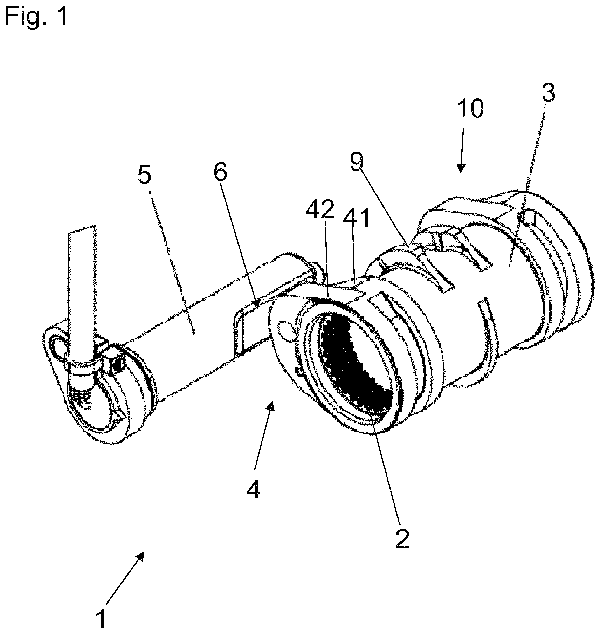

Die Fig. 1 zeigt eine Ventiltriebvorrichtung 1 mit einer Sensoreinheit 5 und einem Schiebestück 3 in perspektivischer Darstellung.

Das Schiebestück 3 weist an der Innenseite eine Kerbverzahnung 2 auf, mittels welche das Schiebestück 3 drehfest und axial verschiebbar auf einer Welle (oder Nockenwelle, nicht dargestellt) gelagert werden kann.

Das Schiebestück 3 weist eine Anzahl an Bestätigungskonturen 4 auf, mittels welcher ein Betätigungsmittel 7 eines Ventils einer Brennkraftmaschine bestätigt werden kann. Insbesondere ist sind die Betätigungskonturen 4 als Nocke mit einem Vorsprung ausgeformt.

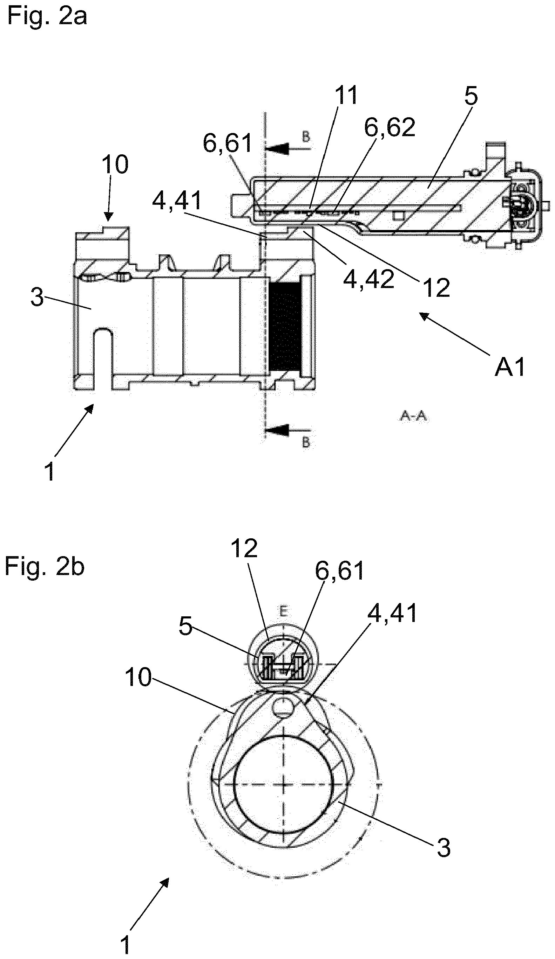

Insbesondere sind zwei Betätigungskonturen 41, 42 an einem ersten Ende des Schiebstücks 3 vorgesehen, wie in den Figuren 2a bis 6b besser ersichtlich ist. Zudem ist ein weiteres Paar an Betätigungskonturen 10 am zweiten Ende des Schiebestücks 3 vorgesehen.

Anstatt auf einem Schiebestück 3 wie in Fig. 1 können die Betätigungskonturen 4 prinzipiell auch auf der Welle direkt angeordnet sein, wobei dann die Welle axial verschiebbar gelagert sein kann.

In beiden Fällen kann die Betätigungskontur 4 axial verschoben werden, entweder mit dem Schiebestück 3 oder mit der Welle.

Das Schiebestück 3 weist eine Schaltkulisse 9 auf, mittels welcher das Schiebestück 3 beispielsweise von einem nicht gezeigten Schaltstift zwischen zwei Axialpositionen A1 und A2 verschiebbar ist.

In Fig. 1 ist zudem eine Sensoreinheit 5 gezeigt. Die Sensoreinheit 5 ist neben dem Schiebestück 3 angeordnet und weist an der dem Schiebestück 3 zugewandten Seite eine Anzahl an Sensoren 6 auf. Die Sensoreinheit 5 weist ein Gehäuse auf, wobei die Anzahl an Sensoren 6 im Gehäuse angeordnet sind. Entsprechende, vorzugsweise elektrische, Verbindungsmittel verbinden die Sensoreinheit 5 beispielsweise mit einer zentralen Steuereinheit des Fahrzeugs mit der Brennkraftmaschine.

Insbesondere ist mindestens ein Sensor 6 den Betätigungskonturen 4, 41, 42 zugewandt, sodass diese in einem Erfassungsbereich 8 mindestens eines Sensors 6 angeordnet sein können.

Die weiteren Betätigungskonturen 10 sind nicht im Erfassungsbereich 8 eines Sensors 6 angeordnet und werden nicht detektiert. Eine Erfassung der weiteren Betätigungskonturen 10 ist nicht unbedingt notwendig, da die Axialposition A1, A2 des Schiebestücks 3 auch allein mittels der Detektion der Betätigungskonturen 4, 41, 42 erfolgen kann.

Die Fig. 2a zeigt eine Schnittdarstellung insbesondere der Vorrichtung aus Fig. 1. Es ist aus dem Schnitt ersichtlich, dass die beiden Betätigungskonturen 41, 42 jeweils eine unterschiedliche Form aufweisen. Die Stärke oder Phase der Betätigung eines nicht gezeigten Betätigungsmittels 7 unterscheiden sich daher, je nachdem welche Betätigungskontur aktiv ist.

In der Sensoreinheit sind zwei Sensoren 6, einer erster Sensor 61 und ein zweiter Sensor 62, angeordnet. Die Sensoren 61, 62 sind auf einer gemeinsamen Platine 11 und innerhalb eines gemeinsamen Gehäuses 12 angeordnet.

Die Fig. 2b zeigt eine alternative Schnittdarstellung des Gegenstands aus der Fig. 2a. In dieser Darstellung ist die Form der Betätigungskontur 41 gut ersichtlich.

Zudem ist die dahinter liegenden Betätigungskontur 10 ersichtlich, welche die gleiche Form wie die nicht ersichtliche Betätigungskontur 42 hat. Diese hat eine von der geschnittenen Betätigungskontur 41 verschiedene Form, insbesondere ist die radiale Ausdehnung größer.

Die Betätigungskontur 41 weist in dieser Drehposition den minimalen Abstand von einem Sensor 61 auf, welcher in der Sensoreinheit 5 angeordnet ist.

Aufgrund der gleichen axialen Anordnung liegt die Betätigungskontur 41 im Erfassungsbereich 81 des Sensors 61.

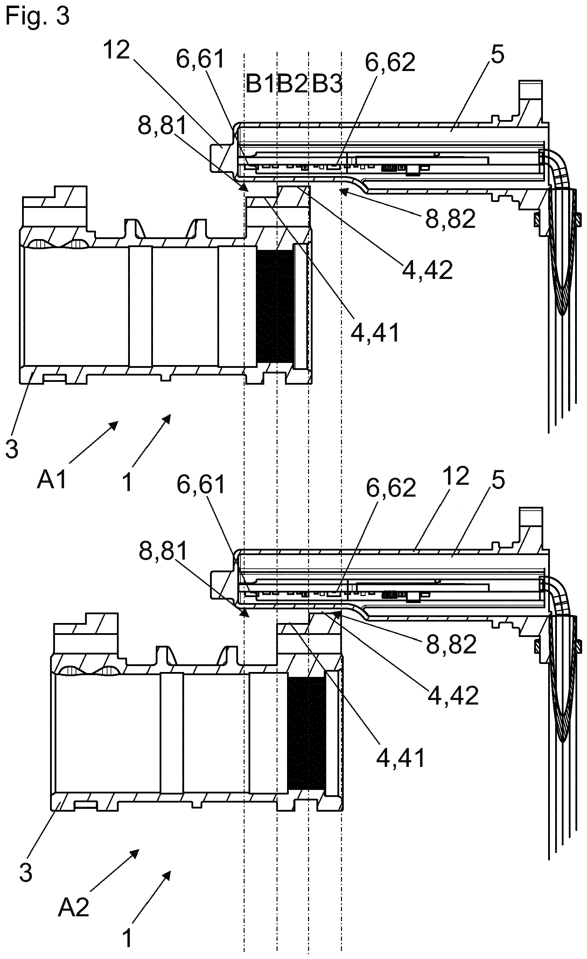

Die Fig. 3 zeigt zwei Axialpositionen A1 und A2 der Anzahl an Betätigungskonturen 4 (und des Schiebestücks 3) relativ zur Sensoreinheit 5. Die Sensoreinheit 5 ist vorzugsweise ortsfest zu einem Zylinderkopf der Brennkraftmaschine angeordnet.

Die obere Darstellung zeigt die erste Axialposition A1.

Die erste Betätigungskontur 41 und der erste Sensor 61 sind in einem ersten Axialbereich B1 angeordnet. Damit ist die erste Betätigungskontur im Erfassungsbereich 81 des Sensors 61.

Die zweite Betätigungskontur 42 ist in einem zweiten Axialbereich B2. In diesem Axialbereich B2 ist kein Sensor angeordnet. Im zweiten Axialbereich B2 ist ein Betätigungsmittel 7 (nicht gezeigt in Fig. 3) zum Betätigen eines Ventils der Brennkraftmaschine angeordnet.

Im eingebauten Zustand liegt die zweite Betätigungskontur 42 damit in der ersten Axialposition A1 am Betätigungsmittel 7 an, zumindest in einer bestimmten Drehposition.

In einem dritten Axialbereich B3 ist in der ersten Axialposition der Anzahl an Betätigungskonturen 4 keine Betätigungskontur angeordnet. Der Sensor 62, welche in diesem Axialbereich B3 angeordnet ist, detektiert daher keine Betätigungskontur 4.

Die erste Axialposition A1 ist folgend zusammengefasst:
- die zweite Betätigungskontur 42 ist die aktive Betätigungskontur, welche in Kontakt mit dem Betätigungsmittel 7 steht,
- der erste Sensor 61 detektiert die Präsenz, und gegebenenfalls die Form, Phase und/oder Drehposition, des ersten Betätigungskontur 41,
- der zweite Sensor 62 detektiert keine Betätigungskontur 4.

Die untere Darstellung der Fig. 3 zeigt die zweite Axialposition A2.

Der erste Sensor 61 ist im ersten Axialbereich B1 angeordnet, womit der erste Sensor 61 keine Betätigungskontur 4 detektiert.

Die erste Betätigungskontur 41 ist in einem zweiten Axialbereich B2 angeordnet. In diesem Axialbereich B2 ist kein Sensor angeordnet. Im zweiten Axialbereich B2 ist ein Betätigungsmittel 7 (nicht gezeigt in Fig. 3) zum Betätigen eines Ventils der Brennkraftmaschine angeordnet.

Im eingebauten Zustand liegt die erste Betätigungskontur 41 damit in der zweiten Axialposition A2 am Betätigungsmittel 7 an, zumindest in einer bestimmten Drehposition.

In einem dritten Axialbereich B3 ist in der zweiten Axialposition A2 die zweite Betätigungskontur 42 angeordnet. Der Sensor 62, welcher in diesem Axialbereich B3 angeordnet ist, detektiert daher die zweite Betätigungskontur 42.

Die zweite Axialposition A2 ist folgend zusammengefasst:
- die erste Betätigungskontur 41 ist die aktive Betätigungskontur, welche in Kontakt mit dem Betätigungsmittel 7 steht,
- der zweite Sensor 62 detektiert die Präsenz, und gegebenenfalls die Form, Phase und/oder Drehposition, des zweiten Betätigungskontur 42,
- der erste Sensor 61 detektiert keine Betätigungskontur 4.

Im Prinzip würde zur Bestimmung der Axialposition A1, A2 nur einer der Sensoren 61, 62 ausreichen. Durch die Ausführung mit zwei Sensoren wird eine Redundanz geschaffen.

In einer nicht dargestellte Zwischenposition zwischen der ersten Axialposition A1 und der zweiten Axialposition A2 kann die erste Betätigungskontur 41 in den Erfassungsbereich 81 des ersten Sensors 61 ragen und die zweite Betätigungskontur 42 in den Erfassungsbereich 82 des zweiten Sensors 62 ragen. Somit können beide Sensoren 61, 62 die Präsenz einer Betätigungskontur detektieren. Sollte ein solcher Zustand nicht nur bei einem kurzen Schaltprozess eingenommen werden, liegt eine Fehlposition vor. Durch das zweifache Detektorsignal kann eine Fehlermeldung getriggert werden, oder es kann der Motor automatisch abgestellt werden.

Die Sensoren 61, 62 sind so konfiguriert, dass der räumliche Erfassungsbereich 81, 82 in einem begrenzten axialen Abschnitt angeordnet ist.

Beispielsweise kann der Erfassungsbereich 81 des Sensors 61 oder der Erfassungsbereich 82 des Sensors 62 den Axialbereich B1 bzw. B3 umfassen. Insbesondere sollte der Erfassungsbereich 81 des Sensors 61 oder der Erfassungsbereich 82 des Sensors 62 nicht in den Axialbereich B2 ragen.

In radialer Richtung ist der Erfassungsbereich 81 des Sensors 61 und der Erfassungsbereich 82 des Sensors 62 ebenfalls begrenzt, insbesondere so, dass zumindest eine "Nase" der Betätigungskontur 41 bzw. 42 detektierbar ist.

Die Sensibilität der Sensoren 61, 62 kann an die jeweiligen Dimensionen, beispielsweise den Minimalabstand der Betätigungskontur zum Sensor, angepasst werden.

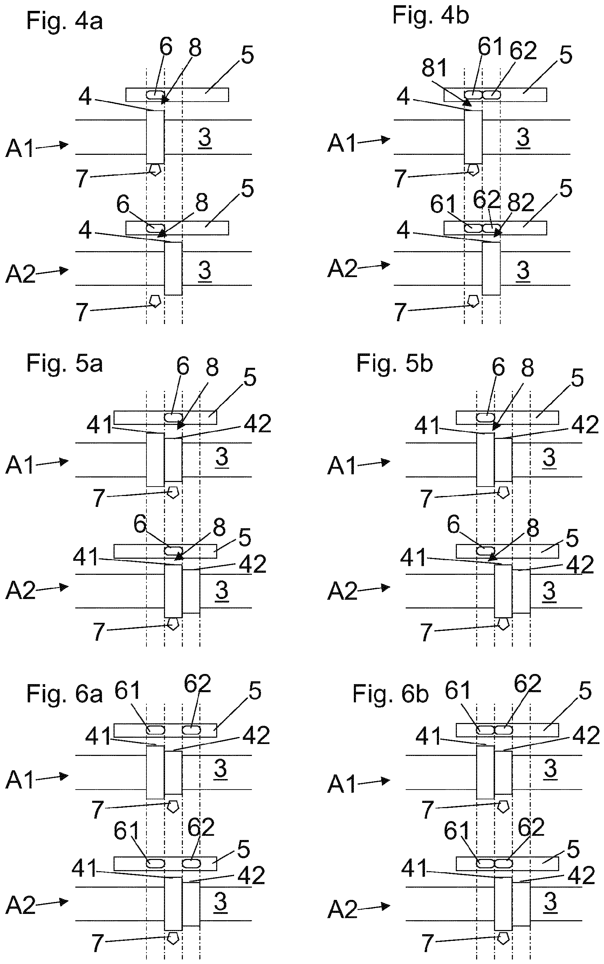

Die Figuren 4a bis 6b zeigen schematische Darstellungen verschiedener Konfigurationen von Sensoren 6, 61, 62 und Betätigungskonturen 4, 41, 42. Es ist jeweils die erste Axialposition A1 in der oberen Darstellung und die zweite Axialposition A2 in der unteren Darstellung gezeigt. Mittels strichpunktierter Linien sind die Axialbereiche B1 und B2 (Figuren 4a und 4b) oder die Axialbereiche B1, B2 und B3 (Figuren 5a bis 6b) dargestellt (aus Gründen der Übersichtlichkeit sind die Bezugszeichen nicht angegeben). Ein Betätigungsmittel 7 zum Betätigen eines Ventils einer Brennkraftmaschine ist schematisch als Pentagon dargestellt.

Die Konfiguration in Fig. 6a stellt die Situation der Fig. 3 schematisch dar.

Die Fig. 4a zeigt eine Betätigungskontur 4 und einen Sensor 6, wobei der Sensor 6 und das Betätigungsmittel 7 in einem ersten Axialbereich B1 angeordnet sind.

In der ersten Axialposition A1 ist die Betätigungskontur 4 im ersten Axialbereich B1 angeordnet, womit die Betätigungskontur 4 im Erfassungsbereich 8 des Sensors 6 angeordnet ist. Die Betätigungskontur 4 ist aktiv, steht also mit dem Betätigungsmittel 7 in Eingriff.

In der zweiten Axialposition A2 ist die Betätigungskontur 4 im zweiten Axialbereich B2 angeordnet. Sie wird daher weder vom Sensor 6 erfasst, noch ist sie aktiv.

Wird eine Betätigungskontur 4 von Sensor 6 detektiert, liegt die erste Axialposition A1 vor. Wird keine Betätigungskontur 4 detektiert, liegt die zweite Axialposition A2 vor.

Die Drehposition, Phase und/oder Form der Betätigungskontur kann nur dann bestimmt werden, wenn die Betätigungskontur aktiv ist.

In Fig. 4b ist ein zusätzlicher Sensor 62 im zweiten Axialbereich B2 angeordnet. Damit kann die Drehposition und/oder Form der Betätigungskontur 4 in beiden Axialpositionen A1 und A2 bestimmt werden. Zudem kann eine fehlerhafte Zwischenstellung detektiert werden, wenn beide Sensoren 61, 62 die Präsenz eines Betätigungskontur 4 erfassen.

Mit einer verschiebbaren Betätigungskontur 4 kann ein Betätigungsmittel 7 in einer ersten Axialposition A1 betätigt werden und in einer zweiten Axialposition A2 nicht betätigt werden. Das Ventil wird demnach in der zweiten Axialposition A2 nicht betätigt, und bleibt beispielsweise permanent geschlossen.

Typischerweise ist eine unterschiedliche Betätigung des Ventils erwünscht. Hierzu können zwei Betätigungskonturen 41, 42 vorgesehen sein, welche eine voneinander verschiedene Form aufweisen. Die zwei Betätigungskonturen 41, 42 können direkt nebeneinander angeordnet sein. Das ist die Situation in den Figuren 5a bis 6b, und auch den Figuren 1 bis 3.

In den Figuren 5a bis 6b ist in der ersten Axialposition A1 die erste Betätigungskontur 41 in einem ersten Axialbereich B1 angeordnet und die zweite Betätigungskontur 42 in einem zweiten Axialbereich B2 angeordnet. In der zweiten Axialposition A2 ist die erste Betätigungskontur 41 in einem zweiten Axialbereich B2 angeordnet und die zweite Betätigungskontur 42 in einem dritten Axialbereich B3 angeordnet. Der zweite Axialbereich B2 liegt zwischen dem ersten und dem dritten Axialbereich B1, B3.

Das Betätigungsmittel 7 ist im zentralen, zweiten Axialbereich B2 angeordnet, sodass in der ersten Axialstellung A1 die zweite Betätigungskontur 42 aktiv ist und in der zweiten Axialstellung A2 die erste Betätigungskontur 41 aktiv ist.

Die Fig. 5a zeigt die Situation mit zwei Betätigungskonturen 41, 42 und einem Sensor 6. Der Sensor 6 ist im zweiten, zentralen Axialbereich B2 angeordnet. Es wird damit jeweils die aktive Betätigungskontur 41, 42 vom Sensor 6 erfasst.

In dieser Konfiguration muss der Sensor 6 zwischen den beiden Betätigungskonturen 41, 42 unterscheiden können, um die Axialposition A1 oder A2 zu bestimmen. Das kann mittels einer Auswertung des Sensorsignals erfolgen, insbesondere mittels einer Auswertung der Pulsweiten des Sensorsignals. Eine fehlerhafte Zwischenposition kann im Prinzip auch detektiert werden, eine solch Detektion beruht jedoch auf komplizierter Signalverarbeitung.

Vorteilhaft ist, die Bestimmung der Axialposition A1, A2 von der Erfassung der Präsenz einer Betätigungskontur 41, 42 abhängig zu machen, und nicht etwa deren Form.

In die Fig. 5b ist der Sensor 6 dazu im ersten Axialbereich B1 angeordnet. In der ersten Axialposition A1 erfasst der Sensor 6 die Präsenz der ersten Betätigungskontur 41. In der zweiten Axialposition A2 erfasst der Sensor keine Betätigungskontur 42. Die Bestimmung der Axialposition A1, A2 ist damit einfacher.

Nachteilig ist, dass eine fehlerhafte Zwischenposition nur schwer detektierbar ist und eine komplizierte Analyse des Signals erfordern würde. Zudem ist die Erfassung nicht redundant.

Das besonders bevorzugte Ausführungsbeispiel der Fig. 6a sieht demnach zwei Sensoren 61, 62 vor, wobei die Sensoren mit einem Abstand zueinander angeordnet sind, der größer als die Breite einer Betätigungskontur 41 oder 42 und kleiner als die Breite beider Betätigungskonturen 41 und 42 ist. Insbesondere ist der erste Sensor 61 im ersten Axialbereich B1 und der zweite Sensor 62 im dritten Axialbereich B2 angeordnet.

Es gelten die Ausführungen, die zu Fig. 3 gemacht wurden. Mit dieser Sensoranordnung ist eine redundante Bestimmung der Axialposition A1, A2 auf Basis einer Präsenzbestimmung von Betätigungselementen möglich. Zudem wird die Detektion einer fehlerhaften Zwischenposition auf Basis einer Präsenzbestimmung von Betätigungselementen möglich.

Erfasst der erste Sensor 61 eine Betätigungskontur 4 und erfasst der zweite Sensor 62 keine Betätigungskontur 4 liegt die erste Axialposition A1 vor. Erfasst der erste Sensor 61 keine Betätigungskontur 4 und erfasst der zweite Sensor 62 eine Betätigungskontur 4 liegt die zweite Axialposition A2 vor.

Optional kann eine fehlerhafte Zwischenposition bestimmt werden, wenn beide Sensoren 61, 62 eine Betätigungskontur 4 erfassen.

Die Fig. 6b zeigt ein weiteres Ausführungsbeispiel, bei welchem ein erster Sensor 61 in einem ersten Axialbereich B1 angeordnet ist und ein zweiter Sensor 62 in einem zweiten Axialbereich B2 angeordnet ist. Eine Bestimmung einer fehlerhaften Zwischenposition ist nicht ohne Weiteres durch eine einfache Präsenzmessung möglich.

### Bezugszeichenliste:

- 1: Ventiltriebvorrichtung
- 2: Kerbverzahnung
- 3: Schiebestück
- 4: Betätigungskontur
41 erste Betätigungskontur
42 zweite Betätigungskontur
- 5: Sensoreinheit
- 6: Sensor
61 erster Sensor
62 zweiter Sensor
- 7: Betätigungsmittel
- 8: Erfassungsbereich
81 Erfassungsbereich des ersten Sensors
82 Erfassungsbereich des zweiten Sensors
- 9: Schaltkulisse
- 10: nicht erfassbare Bestätigungskontur
- 11: Platine
- 12: Gehäuse
- A1: erste Axialposition
- A2: zweite Axialposition
- B1: erster Axialbereich
- B2: zweiter Axialbereich
- B3: dritter Axialbereich

## Patentansprüche

1. Ventiltriebvorrichtung (1) mit mindestens einer Welle, wobei eine Anzahl an Betätigungskonturen (4) zum Betätigen wenigstens eines Betätigungsmittels (7) eines Ventils eines Verbrennungsmotors drehfest an der mindestens einen Welle angeordnet ist, wobei eine Sensoreinheit (5) mit einer Anzahl an Sensoren (6) vorgesehen ist, wobei jeder Sensor (6) der Anzahl an Sensoren (6) einen räumlichen Erfassungsbereich (8) zur Erfassung einer physikalischen Größe aufweist, **dadurch gekennzeichnet, dass** mindestens eine Betätigungskontur (4) der Anzahl an Betätigungskonturen (4) in zumindest einer Axialposition (A1, A2) zumindest teilweise im räumlichen Erfassungsbereich (8) mindestens eines Sensors (6) der Anzahl an Sensoren (6) angeordnet ist.

2. Ventiltriebvorrichtung (1) nach dem vorhergehenden Anspruch, wobei der räumliche Erfassungsbereich (8) des mindestens eines Sensors (6) der Anzahl an Sensoren (6)
- in einem begrenzten axialen Bereich angeordnet ist, und/oder
- jenem räumlichen Bereich entspricht, in welchem die Präsenz mindestens einer Betätigungskontur (4) die Messung der physikalischen Größe über einem bestimmten Schwellwert hervorruft.

3. Ventiltriebvorrichtung (1) nach einem der vorhergehenden Ansprüche, wobei
- an der Welle mindestens ein Schiebestück (3) axial verschiebbar und drehfest gelagert ist, wobei die Anzahl an Betätigungskonturen (4) am mindestens einen Schiebestück (3) angeordnet ist, und/oder
- die Welle gegenüber dem Betätigungsmittel (7) des Ventils eines Verbrennungsmotors verschiebbar gelagert ist und die Anzahl an Betätigungskonturen (4) vorzugsweise direkt auf der Welle angeordnet sind.

4. Ventiltriebvorrichtung (1) nach einem der vorhergehenden Ansprüche, wobei
- die Sensoreinheit (5) ortsfest gegenüber einem Zylinderkopf des Verbrennungsmotors angeordnet ist, und/oder
- die Anzahl an Sensoren (6) auf einer gemeinsamen Platine (11) der Sensoreinheit (5) angeordnet sind und/oder in einem gemeinsamen Gehäuse (12) der Sensoreinheit (5) angeordnet sind, und/oder
- der mindestens eine Sensor (6) der Anzahl an Sensoren (6) als berührungsloser Sensor ausgebildet ist und/oder wobei der mindestens eine Sensor (6) der Anzahl an Sensoren (6) als Magnetfeldsensor, insbesondere Hall-Sensor, ausgebildet ist, vorzugsweise wobei ein von der mindestens einen Betätigungskontur (4) erzeugtes und/oder von der mindestens einen Betätigungskontur (4) beeinflusstes Magnetfeld im Erfassungsbereich (8) vom mindestens einen Sensor (6) erfassbar ist.

5. Ventiltriebvorrichtung (1) nach einem der vorhergehenden Ansprüche, wobei
- die Präsenz, Form, die Drehposition und/oder die Phase mindestens einer Betätigungskontur (4) der Anzahl an Betätigungskonturen (4) im Erfassungsbereich (8) eines Sensors (6) der Anzahl an Sensoren (6) von diesem Sensor (6), insbesondere zusammen mit einer Auswerteeinheit, detektierbar ist, und/oder
- vom mindestens einen Sensor (6) eine in Abhängigkeit der Präsenz, Form, Phase und/oder Drehposition der im Erfassungsbereich (8) befindlichen mindestens einen Betätigungskontur (4) veränderliche physikalische Größe messbar ist.

6. Ventiltriebvorrichtung (1) nach einem der vorhergehenden Ansprüche, wobei ein von der physikalischen Größe abhängiges, vorzugsweise elektrisches, Signal an eine Auswerteeinheit übermittelbar ist, wobei das Signal, insbesondere der zeitliche Verlauf des Signals, von der Auswerteeinheit auswertbar ist, und/oder eine Auswerteeinheit dazu konfiguriert ist, auf eine Axialposition (A1, A2) und/oder eine Drehposition und/oder eine Phase der mindestens einen Betätigungskontur (4) rückzuschließen, vorzugsweise durch Auswerten von einer Stärke und/oder Pulslängen des Signals der Anzahl an Sensoren (6).

7. Ventiltriebvorrichtung (1) nach einem der vorhergehenden Ansprüche, wobei der axiale Abstand zwischen zwei Sensoren (6) der Anzahl an Sensoren (6) größer als die axiale Breite mindestens einer, insbesondere genau einer, Betätigungskontur (4) der Anzahl an Betätigungskonturen (4) und/oder kleiner als die axiale Breite zweier nebeneinander angeordneter Betätigungskonturen (4) der Anzahl an Betätigungskonturen (4) ist, wobei insbesondere zwei Betätigungskonturen (4) vorgesehen sind.

8. Ventiltriebvorrichtung (1) nach einem der vorhergehenden Ansprüche, wobei von der Anzahl an Betätigungskonturen (4) eine erste Axialposition (A1) und eine zweite Axialposition (A2) relativ zur Sensoreinheit (5) einnehmbar ist.

9. Ventiltriebvorrichtung (1) nach dem vorhergehenden Anspruch, wobei mindestens eine Betätigungskontur (4) der Anzahl an Betätigungskonturen (4) in der ersten Axialposition (A1) im Erfassungsbereich (8) mindestens eines Sensors (6) der Anzahl an Sensoren (6) und in der zweiten Axialposition (A2) außerhalb des Erfassungsbereichs (8) dieses mindestens einen Sensors (6) angeordnet ist *(Fig. 4a, auch Figs. 5b, 6a, 6b).*

10. Ventiltriebvorrichtung (1) nach Anspruch 8 und 9, wobei mindestens eine Betätigungskontur (4) der Anzahl an Betätigungskonturen (4) in der ersten Axialposition (A1) im Erfassungsbereich (81) des ersten Sensors (61) und in der zweiten Axialposition (A2) im Erfassungsbereich (82) des zweiten Sensors (62) angeordnet ist *(Fig. 4b, auch Fig. 6b, Umgehungslösung)*.

11. Ventiltriebvorrichtung (1) nach einem der vorhergehenden Ansprüche, wobei die Anzahl an Betätigungsvorrichtungen (4) eine erste Betätigungsvorrichtung (41) und eine zweite Betätigungsvorrichtung (42) umfasst, vorzugsweise wobei die Form der ersten Betätigungsvorrichtung (41) von der Form der zweiten Betätigungsvorrichtung (42) verschieden ist.

12. Ventiltriebvorrichtung (1) nach Anspruch 8 und 11, wobei die zweite Betätigungskontur (42) in der ersten Axialposition (A1) im Erfassungsbereich (8) mindestens eines Sensors (6) der Anzahl an Sensoren (6) angeordnet ist und wobei die erste Betätigungskontur (41) in der zweiten Axialposition (A2) im Erfassungsbereich (8) dieses mindestens einen Sensors (6) angeordnet ist *(Fig. 5a, Umgehungslösung)*.

13. Ventiltriebvorrichtung (1) nach Anspruch 8 und 11, wobei die Anzahl der Sensoren (6) einen ersten Sensor (61) mit einem ersten Erfassungsbereich (81) und einen zweiten Sensor (62) mit einem zweiten Erfassungsbereich (82) umfasst, insbesondere aus diesen besteht, vorzugsweise wobei der erste Sensor (61) und der zweite Sensor (62) so angeordnet sind, dass der erste Erfassungsbereich (81) und der zweite Erfassungsbereich (82) zumindest teilweise verschiedene räumliche Bereiche einnehmen, und insbesondere nicht überlappen, und wobei
- die erste Betätigungskontur (41) in der ersten Axialposition (A1) im Erfassungsbereich (81) des ersten Sensors (61) angeordnet ist und/oder die zweite Betätigungskontur (42) in der ersten Axialposition (A1) außerhalb des Erfassungsbereichs (82) des zweiten Sensors (62) angeordnet ist, und/oder
- die zweite Betätigungskontur (42) in der zweiten Axialposition (A2) im Erfassungsbereich (82) des zweiten Sensors (62) ist und/oder die erste Betätigungskontur (41) in der zweiten Axialposition (A2) außerhalb des Erfassungsbereichs (81) des ersten Sensors (61) ist *(Fig. 6a) .*

14. Verbrennungsmotor umfassend mindestens ein Ventil und mindestens eine Ventiltriebvorrichtung nach einem der vorhergehenden Ansprüche, wobei das mindestens eine Ventil von der mindestens einen Ventiltriebvorrichtung, insbesondere mit dem mindestens einen Betätigungsmittel (7), betätigbar ist.

15. Motorrad mit einem Verbrennungsmotor nach dem vorhergehenden Anspruch.

16. Verfahren zum Bestimmen der Axial- und/oder Drehposition mindestens einer Betätigungskontur (4) zum Betätigen wenigstens eines Betätigungsmittels (7) eines Ventils eines Verbrennungsmotors mittels einer Ventiltriebvorrichtung (1), insbesondere nach einem der vorhergehenden Ansprüche, mit den folgenden Verfahrensschritten:
- Detektieren mindestens einer physikalischen Größe, insbesondere eines Magnetfelds, durch mindestens einen Sensor (6) einer Anzahl an Sensoren (6), wobei die mindestens eine physikalische Größe von der im räumlichen Erfassungsbereich (8) des mindestens einen Sensors (6) befindlichen Betätigungskontur (4), insbesondere von deren Präsenz, Form, Phase und/oder Drehposition, beeinflusst wird,
- der mindestens eine Sensor (6) gibt ein, vorzugsweise elektrisches, Signal in Abhängigkeit der mindestens einen detektierten physikalischen Größe an eine Auswerteeinheit ab,
- das Signal, vorzugsweise eine Stärke und/oder mindestens eine Pulslänge des Signals, wird von der Auswerteeinheit ausgewertet,
- es wird auf die Axial- und/oder Drehposition der mindestens einen Betätigungskontur (4) rückgeschlossen.
